# EUROPEAN PATENT APPLICATION

(11) **EP 1 872 922 A1**
(43) Date of publication of application: **02.01.2008**
(21) Application number: 06076307.5
(22) Date of filing: 27.06.2006
(51) Int. Cl.: B29C 33/38, B29C 71/00, B29C 43/52

(54) **Method and apparatus for manufacturing a polymeric article**

(71) Applicant: Nederlandse Organisatie voor Toegepast-Natuurwetenschappelijk Onderzoek TNO, 2628 VK Delft (NL)
(72) Inventor: de Zwart, Renatus Marius, 5655 JP Eindhoven (NL); Kunen, Joseph Mathias Gerardus, 3123 PN Schiedam (NL); Biemans, Augustines Gerardus Maria, 5667 AL Geldrop (NL)
(74) Representative: van Loon, C.J.J.

(57) **Abstract**

The invention is directed to a method for manufacturing, in one production step and from one material, a polymeric article having at least one optical transparent area and at least one optical non-transparent area. The inventors found that it is possible to simultaneously create transparent and non-transparent areas, while the article is formed, by influencing specific cooling parameters.

## Description

The invention is directed to a method for manufacturing, in one production step and from one material, a polymeric article having at least one optical transparent area and at least one optical non-transparent area.

Polymer optical windows for e.g. micro sensors in clinical, environmental, health and safety, food/beverage and chemical processing analysis applications, must be highly transparent. At the same time, the mutual crosstalk of the optical analysis signals must be minimal.

Conventional polymer processing techniques trying to produce window arrays from one material did not result in a sufficiently high transparency of the windows (required for low optical signal attenuation) and/or a sufficiently low signal crosstalk level between those windows.

The use of two materials, *viz.* an optical transparent material for transferring the optical signals and an optical non-transparent frame material for mechanical support and optical signal isolation (crosstalk prevention), gives problems with respect to the manufacturing and particularly the assembly of such arrays. Positioning and fixing of the optical micro structures (lenses, windows) within the frame make high demands on process and materials (location accuracy, damage of optical structures, shrinking differences) while extra care is required for mutual binding the micro structures and frame.

The not yet published European patent application number 06075107.0 describes a two step manufacturing method for high quality polymer window arrays. The array comprises one or more first areas which are transparent and one or more second areas which are non-transparent. This method comprises two production steps. In a first step a body is made which is entirely transparent or entirely non-transparent. In a subsequent second step the body is divided in transparent and non-transparent areas.

It is an object of the invention to provide a novel method for preparing a polymeric article comprising at least one transparent area and at least one non-transparent area.

It is in particular an object to provide a simple method for manufacturing a polymeric article which comprises at least one first area which is transparent and at least one second area which is non-transparent.

The inventors found that it is possible to simultaneously create transparent and non-transparent areas while the article is formed, by influencing specific cooling parameters during the article manufacturing process.

Accordingly, the invention relates to a method for manufacturing a polymeric article comprising at least one optically transparent area, suitable for guiding light, and at least one optically non-transparent area, suitable for acting as a light barrier, comprising
- heating a thermoplastic material in order to shape an article thereof; and thereafter
- cooling the article, thereby applying to a first area of said article a different cooling rate than to a second area of said article.

Figure 1 shows a schematic illustration of an embodiment wherein the differences in local cooling rate result from the different thicknesses D1 and D2 of the article.

Figure 2 shows a schematic illustration of an embodiment wherein the differences in local cooling rate result from the locally different thermal conductivity coefficients λ1 and λ2 of the forming tool of the article.

Figure 3 shows a schematic illustration of an embodiment wherein the differences in local cooling rate result from the locally different capacities Q1 and Q2 of the cooling system of the article.

It is an advantage of the method of the invention that a single shaping step, e.g. a single moulding step, suffices. Accordingly, at least the shaping step of the method preferably essentially consists of a single production step comprising said heating and cooling in a single device (e.g. a single mould).

It is noted that a method for forming an optical design pattern is known from US-A-4 307 137. An article, comprising polyethyleneterephthalate (PET), is formed in a complicated moulding process comprising at least two moulding steps, one of which is a injection moulding step. By the varying degree of cooling in different areas of the article during an injection shot of that process, the light transmission and/or refractive index within these areas becomes different. The article gets a decorative effect by the resulting optical pattern formed within its wall. The optical design patterns that are described in this document solely serve decorative purposes. In the document no conditions are mentioned that allow the formation of transparent and non-transparent areas for guiding light through the wall respectively for acting as a light barrier, such that the method may be used for manufacturing an article comprising one or more optical windows and the like. Further, it is noted that it is not disclosed to form an optical pattern throughout the entire thickness of the wall.

The present invention is in particular directed to articles in which light can be guided through the transparent areas and in which the non-transparent areas serve as local barriers that prevent crosstalk of separate signals in the transparent areas.

An article of the present invention preferably comprises a micro array of transparent areas surrounded by non-transparent areas that can be used for instance in micro sensors. Every transparent area is meant to guide light, and every non-transparent area is meant to act as a light barrier. Preferably, essentially no light is lost by being directed out of the plane of a transparent area in the article when the light is guided through the transparent area.

In an advantageous embodiment an article is manufactured wherein at least a number of the transparent areas and at least a number of the non-transparent areas in the article run through the entire thickness of the article, *viz.* the transparent and the non-transparent areas extend from one surface of the article to the opposite surface of the article. This is especially advantageous with respect to optical detection methods that are used for micro arrays. Preferably essentially all transparent areas intended for guiding light and essentially all non-transparent areas intended to serves as a barrier for the light essentially extend from one surface of the article to the opposite surface of the article.

In a preferred embodiment, the micro array is a parallelepiped, in particular a rectangular parallelepiped, wherein one or more transparent areas and one ore more non-transparent areas preferably extend from one surface of the micro array to the opposite surface of the micro array in the direction of the thickness of the micro array.

In the context of this invention, an area is considered to be transparent if it is suitable for guiding light, in particular it is considered transparent if the transmittance of light of at least a particular wavelength through 1 mm of the area is at least 80 %, preferably at least 90 %, and more preferably 95-100 %.

An area is considered to be non-transparent if it is suitable to serve as a light barrier, in particular if the transmittance of light of at least a particular wavelength through 1 mm of the area is at most 20 %, preferably at most 10 %, and more preferably 0-5 %. Such non-transparent areas are suitable for acting as a light barrier.

In principle, the wavelength can be any wavelength in the ultraviolet, visible or infrared spectrum, in particular any wavelength from 190 to 1 500 nm. Preferably, the area is transparent respectively non-transparent over a wavelength range of at least 50 nm, preferably at least 100 nm. Usually, the wavelength range will not exceed 250 nm. Preferably, the transparent areas are transparent for light with a wavelength between 400 and 800 nm and the non-transparent areas are not transparent for light within this range.

The article can be composed of any semi-crystalline thermoplastic polymer, including copolymers and blends. In particular, such polymers include polyethyleneterephthalates, polyamides, polymethylpentenes, polypropylenes, and polyethylenenaphthalates.

The at least one transparent area of the article is preferably in an amorphous state. The at least one non-transparent area of the article is preferably in a semi-crystalline or crystalline state.

According to the invention the at least one transparent area and the at least one non-transparent area are made of essentially the same material. In this respect, materials that only differ in physical state, such as an amorphous and a crystalline state, are considered to be essentially the same material.

The material can be brought into the desired article shape by any continuous or discontinuous shaping process, e.g. based on those known in the art. In particular, such processes include injection moulding and warm pressing techniques, such as injection compression techniques respectively embossing and roll-to-roll (reel to reel) techniques. Moulding techniques provide a large freedom in product design, while warm pressing techniques give a higher degree of surface replication. The roll-to-roll technique, being the preferred production technique, result in high production speeds, and enable the use of polymer films.

In accordance with the invention, the material is heated to a suitable temperature above the melting temperature for a suitable period as can be determined based on common general knowledge, the information disclosed in the present claims, description and drawings and optionally some routine experimentation. Subsequently, the material is cooled, in a passive and/or active way, to as low a temperature as required to handle the shaped article.

During the cooling phase at least one optical transparent area (suitable for guiding light) and at least one optical non-transparent area (suitable for acting as a light barrier) are formed. This can for instance be accomplished by cooling a mould in which the material for the article is present in a specific way.

According to the invention differences in local cooling rate are induced in the article in order to create transparent and non-transparent areas. The cooling rate determines where locally transparent areas and non-transparent areas are formed. A high cooling rate usually results in an amorphous area which is optically transparent, while a low cooling rate usually results in crystalline or semi-crystalline areas which are optically non-transparent. In this respect the low cooling rates which typically result in crystalline or semi-cristalline areas may in particular be up to 1 °C/s, more in particular in the range of 0.05 - 1 °C/s. High cooling rates which typically result in amorphous areas may in particular be at least 10 °C/s, more in particular in the range of 10 - 400 °C/s.

Local changes in cooling rate can for example be induced in any of the following ways.

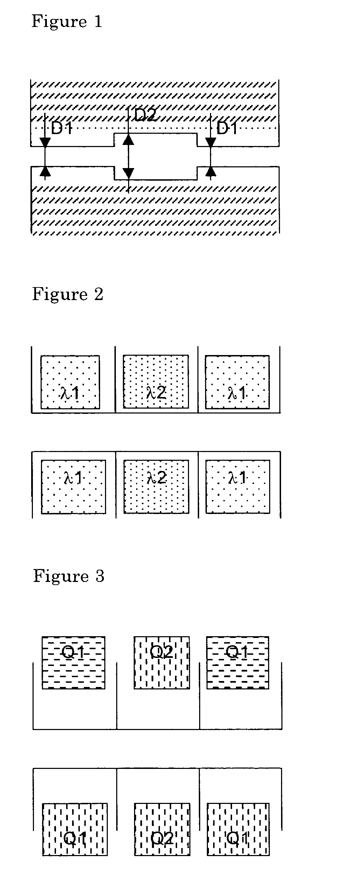

In a first embodiment, schematically illustrated in Figure 1, the cooling rate is changed locally by the dimensions of the article. It is possible to design the article such that it comprises thicker areas and thinner areas. As a result, the thinner areas will cool faster than the thicker areas, and, therefore, the thinner areas become more transparent than the thicker areas. Depending on material and application, the article can be designed to get sufficient difference in local thickness. Differences in thickness can typically amount up to 50%.

In a second embodiment, which is schematically illustrated in Figure 2, and which may be combined with the first embodiment, the cooling rate is changed locally in the article by the thermal conductivity of the forming tool, such as a mould. It is possible to construct the forming tool in such a fashion of different tool materials that it has areas with high thermal conductivity and areas with low thermal conductivity. The tool areas with high thermal conductivity will cause the article to locally cool faster, and thus create more transparent areas in the article.

Typical examples of materials with high thermal conductivity are for instance metals, such as copper. Typical materials with low thermal conductivity are for instance ceramics and polymers, such as polyetheretherketone (PEEK).

Depending on material and application, the tool can be constructed from adequate tool materials to get sufficient difference in local thermal conductivity. For instance, copper has a thermal conductivity of about 390 W/m·K, and a polymer as PEEK of about 0.2 W/m·K, whereas the thermal conductivity coefficient of tool steel has a typical value of 20 W/m·K.

According to a third embodiment, which is schematically illustrated in Figure 3, and which is optionally combined with the first and/or the second embodiment, the cooling rate is changed locally in the article by using a cooling system with differences in local cooling capacity. A cooling system can be built with such differences using one or more cooling units. A locally different cooling rate during cooling of an article can result from the layout of the cooling means (such as channels, pipes, pins and the like) in the forming tool and/or from the combined usage of more cooling units, increasing locally the cooling capacity.

In areas of the forming tool where the effective capacity of the cooling system is high, the cooling rate of the article will be high and, therefore, result in more transparent areas in the article. In areas where the effective capacity of the cooling system is low, the cooling rate of the article will be low and, as a consequence, result in relatively non-transparent areas in the article.

Depending on material and application, the cooling system for manufacturing an article will be engineered in such a way that the locally required cooling capacity is available. When optimising the cooling system, the effective cooling capacity can be more than doubled locally in the forming tool.

The present invention is further directed to a forming tool for forming the polymeric article of the invention. The forming tool comprises at least a first and a second region, wherein said first region is capable of inducing cooling of the article at a relatively low cooling rate, in particular a cooling rate in the range of 0.05 - 1 °C/s, while said second region is capable of inducing cooling of the article at a relatively high cooling rate, in particular in the range of 10 - 400 °C/s.

In an embodiment, one of said first region and said second region of the forming tool has a thermal conductivity coefficient of at most 1 W/m·K, preferably at most 0.5 W/m·K, while the other of said first and second region has a thermal conductivity coefficient of at least 20 W/m·K, preferably at least 30 W/m·K.

In an embodiment, said first region and second region of the forming tool comprise a cooling system and the cooling system of one of said first and second region has a capacity which is at least 2 times larger, preferably at least 10 times larger, than the cooling system of the other of said first and second region.

## Claims

1. Method for manufacturing a polymeric article with at least one optical transparent area, suitable for guiding light, and at least one optical non-transparent area, suitable for acting as a light barrier, comprising the steps of
- heating a thermoplastic material in order to shape an article thereof; and thereafter
- cooling the article, thereby applying to a first area of said article a different cooling rate than to a second area of said article.

2. Method according to claim 1, wherein the differences in local cooling rate are at least partly induced by the dimensions of the article.

3. Method according to any of the previous claims, wherein the differences in local cooling rate are at least partly induced by thermal conductivity properties of a forming tool which is used for forming the article.

4. Method according to any of the previous claims, wherein the differences in local cooling rate are at least partly induced by cooling capacity properties of a system which is used for cooling the article.

5. Method according to any of the previous claims, wherein the article is shaped using a technique chosen from the group consisting of injection moulding and warm pressing techniques, such as injection compression respectively embossing and roll-to-roll (reel to reel) techniques, preferably from roll-to-roll techniques.

6. Method according to any of the previous claims, wherein the article is a micro array of transparent and non-transparent areas.

7. Method according to any of the previous claims, wherein the at least one transparent area extends from one surface of the article to an opposite surface of the article.

8. Method according to any of the previous claims, wherein the at least one non-transparent area extends from one surface of the article to an opposite surface of the article.

9. Method according to any of the previous claims, wherein the at least one optical transparent area is an amorphous area and wherein the at least one optical non-transparent area is a semi-crystalline area or a crystalline area.

10. Method according to any of the previous claims, wherein said article is formed and cooled in a mould or between rolls.

11. Forming tool for forming a polymeric article by a method according to any of the claims 1-10, comprising at least a first and a second region, wherein said first region is capable of inducing cooling of the article with a cooling rate in the range of 0.05 - 1 °C/s, and said second region is capable of inducing cooling of the article with a cooling rate in the range of 10 - 400 °C/s.

12. Forming tool according to claim 11, wherein one of said first and said second region has a thermal conductivity coefficient of at most 1 W/m·K, preferably at most 0.5 W/m·K, and the other of said first and second region has a thermal conductivity coefficient of at least 20 W/m·K, preferably at least 30 W/m·K.

13. Forming tool according to claim 11 or 12, wherein said first and second region comprise a cooling system and wherein the cooling system of one of said first and second region has a capacity which is at least 2 times larger, preferably at least 10 times larger, than the cooling system of the other of said first and second region.
